# EUROPEAN PATENT APPLICATION

(11) **EP 1 333 039 A1**
(43) Date of publication of application: **06.08.2003**
(21) Application number: 03002148.9
(22) Date of filing: 03.02.2003
(51) Int. Cl.: C08F 10/02, C08F 4/602, C08F 4/70

(54) **Process for the polymerization of apha-olefins**

(30) Priority: 04.02.2002 EP 02075606
(71) Applicant: SOLVAY POLYOLEFINS EUROPE - BELGIUM (Société Anonyme), 1050 Bruxelles (BE)
(72) Inventor: Cramail, Henri, 33350 Sainte Terre (FR); Deffieux, Alain, 33000 Bordeaux (FR); Francois, Philippe Jean Paul Emile, 8-B 1490 Court-Saint-Etienne (BE); Radhakrishnan, Karunakaran, University Minnesota, Minneapolis, MN 55455 (US)
(74) Representative: Smith, Julian Philip Howard

(57) **Abstract**

Process for polymerising alpha-olefins in which at least one alpha-olefin is placed in contact, in polymerising conditions, with a catalytic system comprising at least one catalytic complex (a) based on a metal (M) of groups 6 to 12 of the Periodic Table, at least one trialkylaluminium (b) corresponding to the general formula AIR₃, in which each R represents, independently, a linear alkyl group containing from 1 to 30 carbon atoms, at least one trialkylaluminium (c) corresponding to the general formula AIR'₃, in which each R' represents, independently, a branched alkyl group containing from 3 to 30 carbon atoms,
such that the molar ratio of trialkylaluminium (c) to trialkylaluminium (b) is at least 2.

## Description

The present invention relates to a process for the polymerisation of alpha-olefins.

It is known to polymerise alpha-olefins by means of catalytic systems comprising a complex of a transition metal with a bi- or tridentate ligand, and an aluminoxane. Patent application WO 98/27124 describes a process for the polymerisation of ethylene by means of a catalytic system comprising a catalytic complex based on iron or cobalt with pyridinebis-(imines) and methyl-aluminoxane. The use of an aluminoxane leads to enhanced activities and very wide molecular weight distributions, with a fraction of very low molecular weights. In addition, the aluminoxanes come in the form of sticky oligomers and are difficult to handle and to synthesise. Furthermore, the aluminoxanes commercially available have a highly variable purity and are relatively expensive and unstable.

It is also known to polymerise alpha-olefins by means of catalytic systems comprising a complex of a transition metal with a bi- or tridentate ligand, and a trialkylaluminium. Patent application EP 1054022 as well as Kumar et al. (Macromol. Chem. Phys., 2000, 201 (13), 1513) describe the polymerisation of ethylene by means of catalysts based on iron and having ligands of the bis-(imino)pyridine type or based on nickel and having ligands of the di-imine type in the presence of trimethylaluminium (TMA) or triisobutylaluminium (TIBAL). Such catalytic systems exhibit a moderate activity, more particularly at polymerisation temperatures higher than ambient temperature. In addition, the use of TMA leads to a very wide molecular weight distribution.

A process for polymerising alpha-olefins by means of a catalytic system based on a catalyst comprising a complex of a metal of groups 6 to 12 has now been found, which does not present the above-mentioned drawbacks.

To this end, the present invention relates to a process for the polymerisation of alpha-olefins in which at least one alpha-olefin is placed in contact, in polymerising conditions, with a catalytic system comprising at least one catalytic complex (a) based on a metal (M) of groups 6 to 12 of the Periodic Table, at least one trialkylaluminium (b) corresponding to the general formula AlR₃, in which each R represents, independently, a linear alkyl group containing from 1 to 30 carbon atoms, at least one trialkylaluminium (c) corresponding to the general formula AlR'₃, in which each R' represents, independently, a branched alkyl group containing from 3 to 30 carbon atoms, such that the molar ratio of trialkylaluminium (c) to trialkylaluminium (b) is at least 2

All the references to the Periodic Table of the Elements refer to the version published in CRC Handbook of Chemistry and Physics, 77th Edition, 1996/97; the notation used is the new group notation of IUPAC.

In the present invention, the term alpha-olefins is taken to mean terminally unsaturated alpha-olefins containing from 2 to 20, preferably from 2 to 8, carbon atoms, such as, in particular, ethylene, propylene, 1-butene, 1-methyl-pentene, 1-hexene, 1-octene. It goes without saying that, in addition to the alpha-olefin, another monomer copolymerisable with the alpha-olefin may be used in the process according to the invention.

The catalytic complexes (a) used in the present invention are in general chosen from those containing at least two heteroatoms and more particularly from those represented by formula (I) 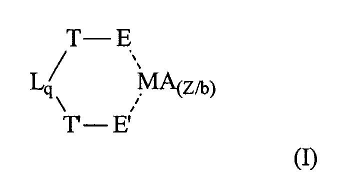 in which
- M is a metal of groups 6 to 12 of the Periodic Table,
- E and E' are electron donor groups containing an atom of group 15 ; E and E' can be different or identical,
- L is an electron donor group containing an atom of group 14 to 16 or a hydrocarbonaromatic ring ; L can be different from or identical to E and/or E',
- T and T' represent, independently, saturated or unsaturated bridges containing elements of groups 14 to 16,
- each A represents, independently, an atom or a group of atoms linked to the metal M in a covalent or ionic manner,
- Z is the oxidation state of M,
- b is the valency of A,
- q is 1 or 0.

The preferred catalytic complexes (a) are those in which the metal (M) is chosen from the metals of groups 6 to 10. The preferred catalytic complexes (a) are those in which A is a halogen atom, an alkoxide, an aryl oxide, an amine, a phosphine, a hydride or a hydrocarbon group, optionally substituted and/or halogenated.

The catalytic complexes (a) used in the present invention may in some cases be complexed by one or more electron donor groups.

The catalytic complexes (a) used in the process according to the invention are with advantage chosen from complexes corresponding to general formula (II) 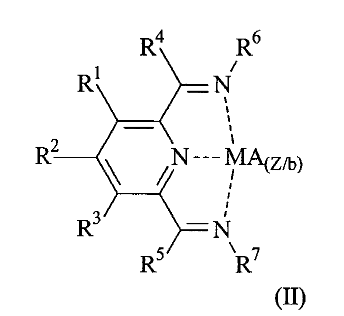 in which
- M, A, Z and b are as defined for formula (I),
- R¹, R², R³, R⁴ and R⁵ each represent, independently, a hydrogen atom, an optionally substituted hydrocarbon group, an optionally substituted heterohydrocarbon group or an inert functional group,
- R⁶ and R⁷ each represent, independently, an aryl, optionally substituted group.

By inert functional group there is taken to mean, in the context of the present invention, an atom or a group of atoms which does not interfere with the conditions of the process according to the present invention, and which does not co-ordinate with the metal (M). There may be mentioned, as inert functional groups, halogen atoms and ethers with the formula -OQ in which Q is a hydrocarbon, optionally substituted group.

Preferred are the catalytic complexes represented by formula (II) in which R⁶ is an aryl group corresponding to the general formula 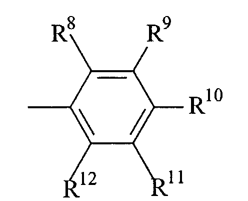 R⁷ is an aryl group corresponding to the general formula 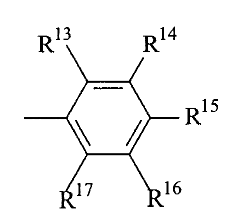 in which
- R⁸ and R¹³ each represent, independently, an optionally substituted hydrocarbon group, an optionally substituted heterohydrocarbon group or an inert functional group,
- R⁹, R¹⁰, R¹¹, R¹², R¹⁴, R¹⁵, R¹⁶ and R¹⁷ each represent, independently, a hydrogen atom, an optionally substituted hydrocarbon group, an optionally substituted heterohydrocarbon group or an inert functional group,
- the groups R⁸, R⁹, R¹⁰, R¹¹, R¹², R¹³, R¹⁴, R¹⁵, R¹⁶ and R¹⁷, which are adjacent, are capable of being connected to one another so as to form a cycle.

Such catalytic complexes have in particular been described in patent application WO 98/27124.

The particularly preferred catalytic complexes (a) are those corresponding to formula (II) in which the metal (M) is chosen from the metals of groups 6 to 9, and more particularly from iron, chromium or cobalt. With advantage, A is a halogen atom, more particularly a chlorine atom.

Good results have been obtained with catalytic complexes (a) corresponding to formula (II) in which
- M is an atom of Fe,
- A is an atom of Cl,
- b is equal to 1,
- Z is equal to 2,
- R¹, R² and R³ are hydrogen atoms,
- R⁴ and R⁵ are each, independently, a hydrogen atom or an alkyl group containing from 1 to 6 carbon atoms,
- R⁶ is an aryl group with the formula 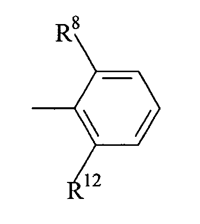
- R⁷ is an aryl group with the formula
in which R⁸ and R¹³ are an alkyl group containing at most 4 carbon atoms, and R¹² and R¹⁷ are a hydrogen atom or an alkyl group containing at most 4 carbon atoms.

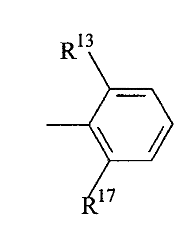

The trialkylaluminiums (b) of formula AIR₃ used in the process according to the invention are in general chosen from those in which each R represents, independently, a linear alkyl group containing from 1 to 18 carbon atoms. They are preferably chosen from those in which R represents, independently, a linear alkyl group containing from 1 to 12 carbon atoms, more particularly from those containing from 1 to 10 carbon atoms. The trialkylaluminiums (b) in which each R is identical are most particularly preferred. As examples of such trialkylaluminiums (b) there may be mentioned trimethylaluminium (TMA), triethylaluminium (TEA), tri-n-propylaluminium. TMA has given particularly good results.

The trialkylaluminiums (c) of formula AIR'₃ used in the process according to the invention are in general chosen from those in which each R' represents, independently, a branched alkyl group containing from 3 to 18 carbon atoms. They are preferably chosen from those in which R' represents, independently, a branched alkyl group containing from 3 to 12 carbon atoms, more particularly from those containing from 3 to 10 carbon atoms. The trialkylaluminiums (c) in which each R' is identical are most particularly preferred. As examples of such trialkylaluminiums (c) there may be mentioned triisopropylaluminium, triisobutylaluminium (TIBAL), tri-tertiarybutylaluminium. TIBAL has given particularly good results.

The catalytic system used in the process according to the invention is substantially free of aluminoxanes. With advantage, it does not contain any ionising agents such as triphenylcarbenium tetrakis(pentafluorophenyl)borate, N,N-dimethylanilium tetrakis(pentafluorophenyl)borate, tri(n-butyl)-ammonium tetrakis (pentafluorophenyl)borate, tri(pentafluoro-phenyl)boron, triphenylboron, trimethylboron, tri(methylsilyl)boron and organoboroxines. The catalytic system used in the process according to the invention may in some cases contain other organoaluminium compounds different from trialkylaluminium (b), trialkylaluminium (c) and an aluminoxane.

The quantities of trialkylaluminium (b) and trialkylaluminium (c) used in the process according to the invention are such that the molar ratio of trialkylaluminium (c) to trialkylaluminium (b) is at least 2, with advantage at least 2.5. Molar ratios of at least 3 are particularly preferred because they make it possible to obtain enhanced activities and narrow molecular weight distributions, most often of less than 5. The method of measuring the molecular weight distribution is explained below in relation to the examples. In general, the molar ratio of trialkylaluminium (c) to trialkylaluminium (b) is at most 20, with advantage at most 10.

The quantities of trialkylaluminium (b) and trialkylaluminium (c) used in the process according to the invention are such that the atomic ratio of the aluminium coming from trialkylaluminium (b) and trialkylaluminium (c) to the metal (M) coming from the catalytic complex (a) is from 1 to 20000. Preferably, said ratio is at least 2. Most often, the total quantities of alkylaluminiums (b) and (c) used are such that the atomic ratio of the aluminium to the metal (M) is at most 15000, more particularly at most 10000.

In the process according to the invention, the trialkylaluminiums (b) and (c) may be placed in contact together beforehand, alternatively in the presence of a diluent and/or of a solvent. In the process according to the invention, the trialkylaluminiums (b) and (c) may be placed in contact with the alpha-olefin in the polymerisation reactor before adding the catalytic complex (a). Alternatively, only one part of the trialkylaluminiums (b) and (c) is placed in contact with the alpha-olefin in the polymerisation reactor; the other part is used to effect a pre-mixture with the catalytic complex (a). A variant consists in using only trialkylaluminium (b) or a part of trialkylaluminium (b) to effect a pre-mixture with the catalytic complex (a), and only trialkylaluminium (c) or a part of trialkylaluminium (c) for the pre-contact with the alpha-olefin in the polymerisation reactor. Alternatively, only trialkylaluminium (c) or a part of trialkylaluminium (c) is used to effect a pre-mixture with the catalytic complex (a), and only trialkylaluminium (b) or a part of trialkylaluminium (b) for the pre-contact with the alpha-olefin in the polymerisation reactor. Another possibility is to effect a pre-mixture of the catalytic complex (a) with the trialkylaluminiums (b) and (c), and then to place it in the polymerisation reactor in the presence of the alpha-olefin.

The polymerisation process according to the invention may be carried out continuously or discontinuously, according to any known process, in particular in solution or in suspension in a hydrocarbon diluent, in suspension in the monomer, or one of the monomers, maintained in the liquid state or else in gaseous phase.

Optionally, the polymerisation process according to the invention may be carried out in the presence of one or more agents for adjusting the molecular weight of the polyolefins such as hydrogen. The process according to the invention may also be carried out with the addition of one or more anti-caking agents and/or one or more poison detection agents such as organic derivatives of lithium, magnesium, zinc, aluminium or tin.

The temperature at which the polymerisation process according to the invention is carried out is generally from - 50 °C to + 300 °C, most often from - 20 to 130 °C. The polymerisation temperature is preferably at least 30 °C. In a preferred manner, it does not exceed 115 °C.

The total pressure at which the process according to the invention is carried out is in general from 1 10⁵ to 100 10⁵ Pa, more particularly from 1 10⁵ to 55 10⁵ Pa.

The polymerisation process according to the invention is with advantage applied to the manufacture of ethylene polymers, and more particularly to the manufacture of homo- and copolymers of ethylene containing at least 90 moles % of units derived from ethylene. The preferred copolymers are those of ethylene and another alpha-olefin containing from 3 to 8 carbon atoms. Particularly preferred are copolymers of ethylene and 1-butene and/or 1-hexene. In this case, the polymerisation process is preferably carried out in suspension in a hydrocarbon diluent. The hydrocarbon diluent is generally chosen from aliphatic hydrocarbons containing from 3 to 10 carbon atoms. Preferably, the diluent is chosen from propane, isobutane, hexane or their mixtures.

The process according to the invention makes it possible to obtain polymers of alpha-olefins with enhanced activities in general at least equivalent to those obtained by using aluminoxanes. The process according to the invention makes it possible in general to obtain enhanced catalytic activities even when using atomic ratios of the aluminium to the metal (M) that are less than those generally used with aluminoxanes. The process according to the invention also makes it possible to obtain polymers of alpha-olefins having narrow molecular weight distributions. in general of less than 5.

The following examples serve to illustrate the invention. The methods of measuring the quantities given in the examples. and the meaning of the symbols used in said examples are explained below.

The mean molecular weights in number (Mₙ) and in weight (M_{w}) are obtained by steric exclusion chromatography based on a 0.5 g/l solution of polymer in trichlorobenzene, using a polystyrene column such as the Waters STYRAGEL® HMW 6E column marketed by Waters Co Ltd. The molecular weight distribution (MWD) is characterised by the M_{w}/Mₙ ratio.

The catalytic activity is characterised by the quantity of polymer formed during the polymerisation tests and is expressed in kg of polymer per mole of metal (M) used, per hour of polymerisation and per 10⁵ Pa.

### Examples 1 to 3

100 ml of toluene were added to a 300 ml autoclave conditioned with nitrogen beforehand. The autoclave was heated to 30 °C and run under vacuum for 5 minutes. Ethylene was then added until a pressure of 1 x 10⁵ Pa was obtained. The required quantities of trialkylaluminium (b) and (c) for obtaining the atomic ratio Al /Fe indicated in Table 1 were then introduced into the reactor.

Said mixture was then agitated before starting the polymerisation by the introduction of 0.8 x 10⁻³ mmole of the following catalytic complex

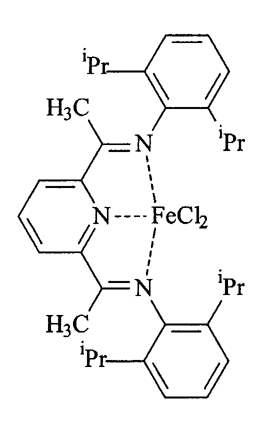

The temperature and the pressure were maintained constant for an hour. The polymerisation was stopped by degassing of the ethylene. The contents of the reactor were emptied into a beaker containing 100 ml of methanol. 300 ml of toluene were added to the reactor and agitated for 2 hours at 100 °C under 5 x 10⁵ Pa of nitrogen in order to dissolve there the polymer remaining in the reactor. Said toluene was then added to the same beaker. A large excess of acetone and 5 ml of concentrated HCl diluted in 50 ml of water were added to the 600 ml of toluene in order to precipitate the polymer there and to destroy the catalyst and the co-catalysts present. The precipitated polymer was filted and dried to constant weight.

The results obtained are given in Table 1 below.

### Example 4R (not in accordance with the invention)

The operations of Example 1 were repeated except that the quantities of TMA (b) and TIBAL (c) were such that the molar ratio (c)/(b) was less than 2.

The results obtained are given in Table 1 below.

A comparison of the results obtained with those of Examples 1 to 3 shows that the process according to the invention using a trialkylaluminium (b) and a trialkylaluminium (c) in a molar ratio (c)/(b) of at least 2 makes it possible to obtain polyethylenes having a narrow MWD.

### Example 5R (not in accordance with the invention)

The operations of Example 1 were repeated except that the TMA alone was used and such that the atomic ratio Al/Fe was 1000.

The results obtained are given in Table 1 below.

A comparison of the results obtained with those of Examples 1 to 3 shows that the process according to the invention using a trialkylaluminium (b) and a trialkylaluminium (c) in a molar ratio (c)/(b) of at least 2 makes it possible to obtain, with an enhanced catalytic activity, polyethylenes having a narrow MWD.

### Example 6R (not in accordance with the invention)

The operations of Example 1 were repeated except that TIBAL alone was used.

The results obtained are given in Table 1 below.

A comparison of the results obtained in the examples with those of Examples 1 to 3 shows that the process according to the invention using a trialkylaluminium (b) and a trialkylaluminium (c) in a molar ratio (c)/(b) of at least 2 makes it possible to obtain a more enhanced catalytic activity compared with a catalytic system containing the same catalytic complex and only one trialkylaluminium (c).

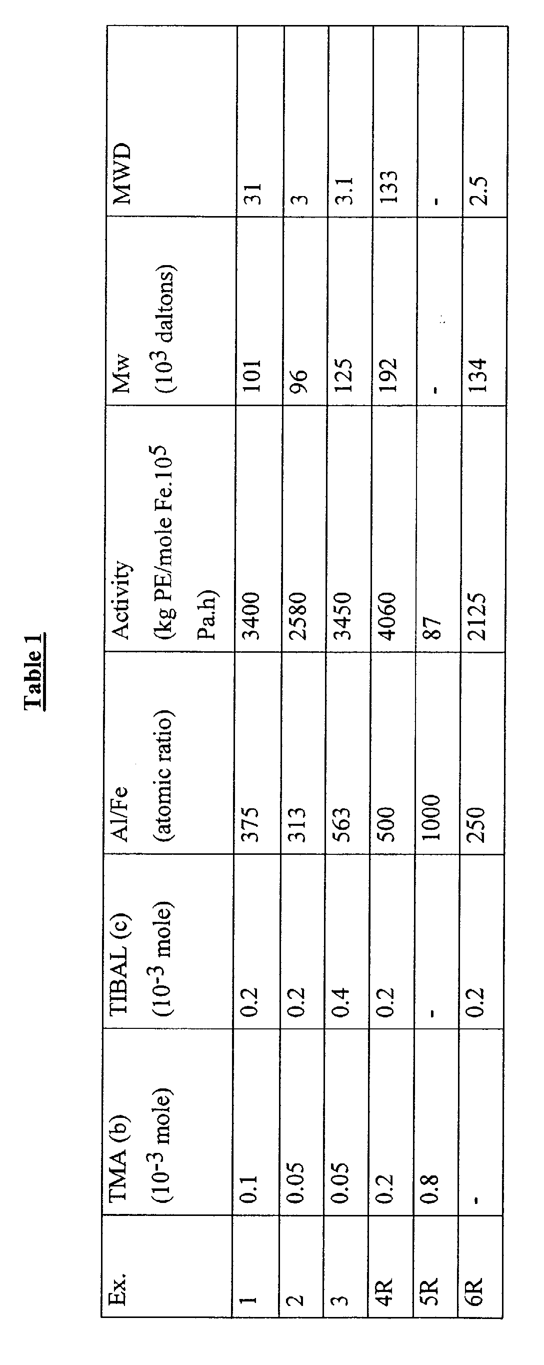

## Claims

1. Process for the polymerisation of alpha-olefins in which at least one alpha-olefin is placed in contact, in polymerising conditions, with a catalytic system comprising at least one catalytic contact (a) based on a metal (M) of groups 6 to 12 of the Periodic Table,
at least one trialkylaluminium (b) corresponding to the general formula AlR₃, in which each R represents, independently, a linear alkyl group containing from 1 to 30 carbon atoms, at least one trialkylaluminium (c) corresponding to the general formula AlR'₃, in which each R' represents, independently, a branched alkyl group containing from 3 to 30 carbon atoms,
such that the molar ratio of trialkylaluminium (c) to trialkylaluminium (b) is at least 2.

2. Process according to claim 1, in which the catalytic complex (a) corresponds to the general formula (II) 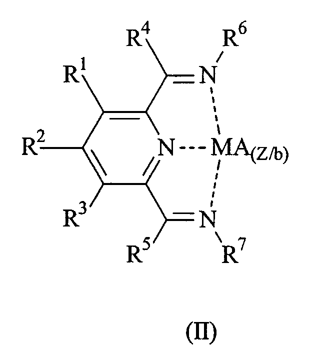 in which
- M is a metal of groups 6 to 12 of the Periodic Table, each A represents, independently, an atom or a group of atoms linked to the metal M in a covalent or ionic manner,
- Z is the oxidation state of M,
- b is the valency of A,
- R¹, R², R³, R⁴ and R⁵ each represent, independently, a hydrogen atom, an optionally substituted hydrocarbon group, an optionally substituted heterohydrocarbon group or an inert functional group,
- R⁶ and R⁷ each represent, independently, an aryl, optionally substituted group.

3. Process according to claim 2, in which the catalytic complex corresponds to formula (II) in which
R⁶ is an aryl group with the general formula 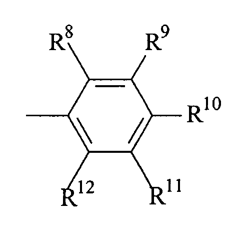 and R⁷ is an aryl group with the general formula 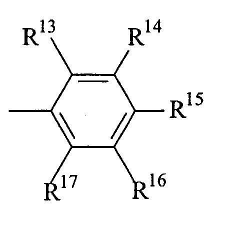 in which
- R⁸ and R¹³ each represent, independently, an optionally substituted hydrocarbon group, an optionally substituted heterohydrocarbon group or an inert functional group,
- R⁹, R¹⁰, R¹¹, R¹², R¹⁴, R¹⁵, R¹⁶ and R¹⁷ each represent, independently, a hydrogen atom, an optionally substituted hydrocarbon group, an optionally substituted heterohydrocarbon group or an inert functional group,
- the groups R⁸, R⁹, R¹⁰, R¹¹, R¹², R¹³, R¹⁴, R¹⁵, R¹⁶ and R¹⁷, which are adjacent, are capable of being connected to one another so as to form a cycle.

4. Process according to claim 3, in which the catalytic complex (a) corresponds to formula (II) in which
- M is an atom of Fe,
- A is an atom of Cl,
- b is equal to 1,
- Z is equal to 2,
- R¹, R² and R³ are hydrogen atoms,
- R⁴ and R⁵ are each, independently, a hydrogen atom or an alkyl group containing from 1 to 6 carbon atoms,
- R⁶ is an aryl group with the formula 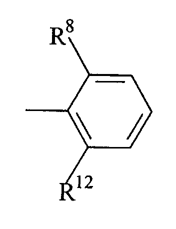
- R⁷ is an aryl group with the formula 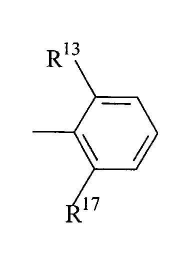 in which R⁸ and R¹³ are an alkyl group containing at most 4 carbon atoms, and R¹² and R¹⁷ are a hydrogen atom or an alkyl group containing at most 4 carbon atoms.

5. Process according to any one of claims 1 to 4, in which trialkylaluminium (b) corresponds to the general formula AIR₃ in which each R represents, independently, a linear alkyl group containing from 1 to 10 carbon atoms.

6. Process according to claim 5, in which trialkylaluminium (b) is trimethylaluminium.

7. Process according to any one of claims 1 to 6, in which trialkylaluminium (c) corresponds to the general formula AIR'₃ in which each R' represents, independently, a branched alkyl group containing from 3 to 10 carbon atoms.

8. Process according to claim 7, in which trialkylaluminium (c) is triisobutylaluminium.

9. Process according to any one of claims 1 to 8, in which the atomic ratio of the aluminium coming from trialkylaluminium (b) and from trialkylaluminium (c) to the metal (M) coming from the catalytic complex (a) is from 1 to 20000.

10. Process according to any one of claims 1 to 9, in which the polmerisation is carried out at a temperature of- 50 to 300 °C and under a pressure of 1 10⁵ to 100 10⁵ Pa.

11. Process according to any one of claims 1 to 10, applied to the manufacture of homo- or copolymers of ethylene containing at least 90 moles % of units derived from ethylene.
